# FASCICULE DE BREVET EUROPEEN

(11) **EP 4 305 328 B1**
(45) Date de publication et mention de la délivrance du brevet: **05.08.2026**
(21) Numéro de dépôt: 22710691.1
(22) Date de dépôt: 24.02.2022
(51) Int. Cl.: F16K 3/26, F16K 1/12, F16K 47/08, F25B 41/35, F25B 41/30

(54) **VANNE DE DETENTE COMPORTANT UN COULISSEAU MOBILE**
ENTSPANNUNGSVENTIL MIT EINEM BEWEGLICHEN STÖSSEL
PRESSURE RELIEF VALVE WITH A MOVABLE SLIDE

(30) Priorité: 08.03.2021 FR 2102208
(43) Date de publication de la demande: 17.01.2024
(73) Titulaire: Schrader, 25301 Pontarlier cedex (FR)
(72) Inventeur: GRESSET, Benoit, 25300 Pontarlier (FR); JOLY, Loïc, 25300 Pontarlier (FR); ROBERT, Sébastien, 25300 Pontarlier (FR)
(74) Mandataire: Novagraaf Technologies
(86) Numéro de dépôt international: PCT/FR2022/050336
(87) Numéro de publication internationale: WO 2022/189722

(56) Documents cités:
- EP-A1- 2 725 268
- EP-A1- 3 392 534
- EP-A2- 0 147 357
- WO-A1-2004/001260
- US-A- 4 679 592
- US-A- 5 460 349

## Description

### Domaine technique de l'invention

La présente invention concerne une vanne de détente.

L'invention concerne plus particulièrement une vanne de détente et d'isolement prévue pour contrôler le passage d'un fluide entre un conduit amont et un conduit aval, en particulier lorsque le fluide est soumis à de fortes pressions.

### Arrière-plan technique

On connait différents types de vannes de détente et d'isolement pour contrôler le passage d'un fluide. Ce type de vanne est utilisé notamment pour détendre un gaz ou remplir une fonction tout ou rien dite « on-off ».

Dans le cas d'applications sous fortes pressions, dès qu'une surface mobile est soumise à une pression différentielle, les forces à mobiliser sont considérables ce qui nécessite l'utilisation d'actionneur avec un couple important et ce qui augmente les risques de coincement.

Il existe donc un besoin pour une solution simple et économique qui permette de commander une vanne de détente avec un actionneur de faible couple. On connaît aussi des vannes telles que divulguées dans les documents EP0147357A2, WO2004/001260A1, US5460349A, et US4679592A1.

### Résumé de l'invention

Pour résoudre le problème mentionné précédemment, l'invention propose une vanne de détente prévue pour être agencée dans un passage de fluide entre un conduit amont et un conduit aval, la vanne de détente comprenant les caractéristiques listées dans le jeu de revendications ci-joint.

La vanne de détente selon l'invention permet de supporter des différentiels de pression particulièrement élevés sans nécessiter un actionneur avec un couple très important. En fonction de la configuration de l'évidement, il est possible de choisir le degré de progressivité de la détente avec une grande finesse, ce qui rend la vanne de détente utilisable pour de nombreuses applications.

Un autre avantage de la vanne de détente selon l'invention est qu'elle peut être réversible et utilisée dans les deux sens de circulation du fluide.

Selon d'autres caractéristiques avantageuses de l'invention :
- l'extrémité axiale aval du corps de vanne est pourvue d'un élément d'étanchéité radiale qui coopère de manière étanche par glissement avec l'alésage cylindrique ;
- l'élément d'étanchéité comporte une bague de frottement, par exemple en polytétrafluoroéthylène, qui est plaquée contre l'alésage cylindrique par un élément élastique de rappel;
- le tronçon d'extrémité axiale aval du corps de vanne comporte une extension axiale et un élément de retenue qui est fixé sur l'extension axiale et qui retient axialement l'élément d'étanchéité sur le corps de vanne ;
- l'élément élastique de rappel est constitué par un joint annulaire en matériau du type élastomère ;
- la bague de frottement comporte une gorge annulaire intérieure dans laquelle une partie de l'élément élastique de rappel vient se loger ;
- le tronçon d'extrémité axiale aval du corps de vanne comporte une extension axiale et l'extension axiale aval du corps de vanne comporte une gorge annulaire extérieure dans laquelle une partie de l'élément élastique de rappel vient se loger ;
- le corps de vanne comporte une surface formant siège, entre le tronçon d'extrémité axiale aval et le tronçon d'extrémité axiale amont, une extrémité axiale amont du coulisseau venant en appui axial étanche contre le siège dans la position fermée ;
- le coulisseau comporte au moins un évent qui fait communiquer l'intérieur et l'extérieur du coulisseau à l'extrémité aval de la vanne de détente ;
- l'évent s'étend radialement dans la paroi axiale du coulisseau ;
- le coulisseau comporte un dispositif anti rotation prévu pour coopérer avec un élément fixe lors du coulissement du coulisseau entre sa position de fermeture et sa position d'ouverture de manière à empêcher la rotation du coulisseau par rapport au corps de vanne ;
- le corps de vanne comporte plusieurs orifices aval répartis circonférentiellement ;
- la vanne est du type bidirectionnelle, la détente pouvant être réalisée depuis le conduit amont vers le conduit aval et depuis le conduit aval vers le conduit amont.

L'invention propose aussi un ensemble de vanne comportant :
- une vanne de détente,
- un actionneur apte à commander la vanne de détente en position ouverte ou fermée,
- un corps de montage comportant un conduit amont et un conduit aval, et comportant un logement apte à recevoir la vanne de détente,
caractérisé en ce que la vanne de détente est réalisée selon l'une quelconque des caractéristiques précédentes, l'actionneur étant relié au coulisseau pour en commander le coulissement entre sa position d'ouverture et sa position de fermeture.

Selon une caractéristique avantageuse de l'ensemble de vanne, le diamètre intérieur du logement est légèrement supérieur au diamètre extérieur du coulisseau, de manière à former un passage pour le fluide depuis le conduit aval jusqu'à l'intérieur du coulisseau à travers les évents assurant un équilibre de pression entre l'intérieur et l'extérieur du coulisseau.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective éclatée qui représente schématiquement un ensemble de vanne équipé d'une vanne de détente selon un premier mode de réalisation de l'invention ;
[Fig.2] - la figure 2 est une vue en coupe axiale selon le plan de coupe 2-2 qui représente l'ensemble de vanne de la figure 1 en position de fermeture ;
[Fig.3] - la figure 3 est une vue similaire à celle de la figure 2 qui représente l'ensemble de vanne de la figure 1 en position d'ouverture complète ;
[Fig.4] - la figure 4 est une vue similaire à celle de la figure 2 qui représente un deuxième mode de réalisation de la vanne de détente en position de fermeture, qui ne fait pas partie de l'invention ;
[Fig.5] - la figure 5 est une vue similaire à celle de la figure 4 qui représente le deuxième mode de réalisation de la vanne de détente en position d'ouverture complète, qui ne fait pas partie de l'invention ;
[Fig.6] - la figure 6 est une vue en perspective qui représente schématiquement le corps de vanne et sa fente selon le deuxième mode de réalisation qui ne fait pas partie de l'invention.

### Description détaillée de l'invention

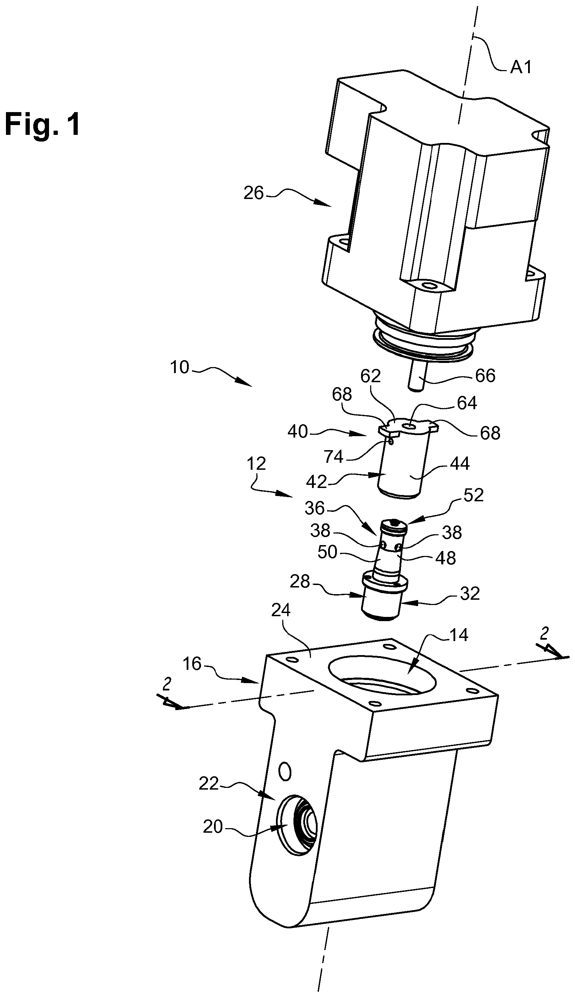

Sur les figures 1 à 3 on a représenté un ensemble de vanne 10 réalisé conformément à un premier mode de réalisation de l'invention. L'ensemble de vanne 10 comporte une vanne de détente 12 qui est insérée dans un logement 14 aménagé dans un corps de montage 16.

Le corps de montage 16 comporte un conduit amont 18, à gauche en considérant les figures, et un conduit aval 20, à droite en considérant les figures, qui débouchent chacun dans une partie du logement 14. L'ensemble de vanne 10 comporte ainsi un passage de fluide 22 formé par le conduit amont 18, le conduit aval 20, et la vanne de détente 12.

Le logement 14 débouche ici sur une face supérieure 24 du corps de montage 16 pour permettre l'insertion de la vanne de détente 12 dans le logement 14. Un actionneur 26 est ici monté sur la face supérieure 24 de manière à pouvoir commander la vanne de détente 12 en position ouverte ou fermée.

Dans la suite de la description, on utilisera à titre non limitatif une orientation de l'amont vers l'aval selon le passage de fluide 22. Bien entendu, l'ensemble de vanne 10 et la vanne de détente 12 sont prévus pour fonctionner dans les deux sens, de sorte que le choix de l'aval et de l'amont sont arbitraires et visent uniquement à faciliter la description des figures.

On utilisera aussi à titre non limitatif une orientation axiale de l'amont vers l'aval, selon l'axe principal A1 de la vanne de détente 12, ce qui correspond à une orientation verticale de bas en haut en considérant les figures 1 à 3.

La vanne de détente 12 comprend un corps de vanne 28 tubulaire formant un canal principal 30 suivant l'axe principal A1. Le corps de vanne 28 comporte un tronçon d'extrémité axiale amont 32 qui est pourvu d'un orifice amont 34 en communication avec le conduit amont 18. Le tronçon d'extrémité axiale amont 32 forme ici un culot sensiblement cylindrique qui est reçu de manière complémentaire dans le fond du logement 14 de manière que l'orifice amont 34 débouche dans le conduit amont 18. L'orifice amont 34 correspond ici à l'extrémité axiale amont du canal principal 30.

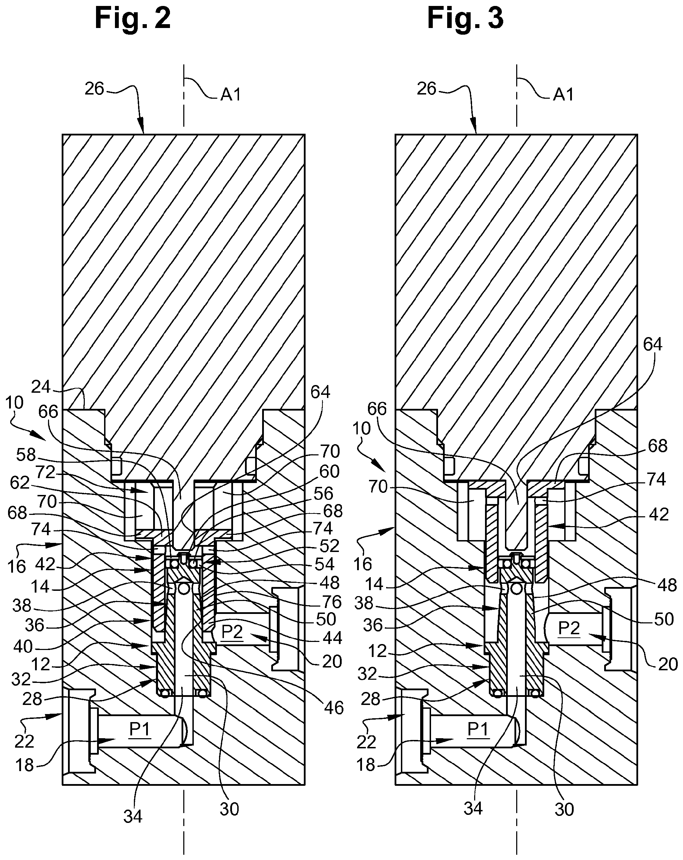

Le corps de vanne 28 comporte un tronçon d'extrémité axiale aval 36 qui est pourvu d'au moins un orifice aval 38 prévu pour être en communication avec le conduit aval 20, lorsque la vanne de détente 12 est en position d'ouverture, comme illustré par la figure 3. Avantageusement le tronçon d'extrémité axiale aval 36 comporte ici quatre orifices aval 38 qui s'étendent radialement et qui sont répartis circonférentiellement tous les quatre-vingt-dix degrés.

La vanne de détente 12 est équipée d'un dispositif d'obturation 40 qui est mobile par rapport aux orifices aval 38 entre une position fermée, illustrée par la figure 2, et une position ouverte, illustrée par la figure 3.

Le dispositif d'obturation 40 comporte un coulisseau 42 qui est monté coulissant axialement sur le tronçon d'extrémité axiale aval 36 du corps de vanne 28, entre la position fermée dans laquelle une paroi axiale 44 du coulisseau 42 obture les orifices aval 38 et la position ouverte dans laquelle la paroi axiale 44 du coulisseau 42 libère le passage entre les orifices aval 38 et le conduit aval 20.

La paroi axiale 44 du coulisseau 42 a ici une forme cylindrique tubulaire de profil circulaire et délimite ainsi un alésage cylindrique 46 intérieur.

Le tronçon d'extrémité axiale aval 36 du corps de vanne 28 comporte, au voisinage des orifices aval 38, un évidement 48 prévu pour provoquer une détente progressive et maitrisée lors de l'ouverture de la vanne de détente 12. Dans le mode de réalisation représenté, le tronçon d'extrémité axiale aval 36 comporte un tronçon tronconique 50 de diamètre extérieur décroissant de l'amont vers l'aval jusqu'aux orifices aval 38. Ainsi, l'évidement 48 est formé dans l'espace radial délimité d'un côté par le tronçon tronconique 50 et de l'autre par l'alésage cylindrique 46.

L'alésage cylindrique 46 a ici un diamètre légèrement inférieur au plus grand diamètre du tronçon tronconique 50 de manière que, dans la position fermée, la paroi axiale 44 du coulisseau 42 puisse être en contact étanche avec la base du tronçon tronconique 50, à l'extrémité axiale aval du coulisseau 42. Il n'y a donc pas de passage de fluide entre l'évidement 48 et le conduit aval 20. Le fluide provenant du canal principal 30 est emprisonné dans l'évidement par la paroi axiale 44 du coulisseau 42 et retenu du côté amont par le contact entre la paroi axiale 44 et le corps de vanne 28, et du côté aval par un élément d'étanchéité 52 radiale.

L'élément d'étanchéité 52 est ici agencé à l'extrémité axiale aval du corps de vanne 28. Il permet d'assurer une étanchéité statique et une étanchéité dynamique par glissement contre l'alésage cylindrique 46.

L'élément d'étanchéité 52 comporte ici une bague de frottement 54, de préférence en polytétrafluoroéthylène, qui est plaquée contre l'alésage cylindrique 46 par un élément élastique de rappel 56. L'élément élastique de rappel 56 est ici constitué d'un joint annulaire en matériau élastomère, ou joint torique.

La bague de frottement 54 présente notamment l'avantage de contribuer au guidage en coulissement axial par son frottement contre le coulisseau 42. Selon le mode de réalisation représenté, l'élément d'étanchéité 52 est retenu axialement sur le tronçon d'extrémité axiale aval 36 par un élément de retenue 58, ici une rondelle sertie sur une extension axiale 60 en forme de pion cylindrique. L'élément de retenue 58 peut être serti grâce à une opération de bouterolage appliquée sur l'extrémité libre de l'extension axiale 60.

Le coulisseau 42 comporte ici, à son extrémité axiale aval, une plaque transversale 62 munie d'un trou taraudé 64. L'actionneur 26 comporte une tige d'actionnement 66 formant ici une vis sans fin prévue pour coopérer avec le trou taraudé 64 de manière à provoquer le déplacement du coulisseau 42 suivant l'axe principal A1.

Ainsi, lorsque la tige d'actionnement 66 est entraînée en rotation dans le sens du vissage, elle provoque le coulissement axial du coulisseau 42 de l'amont vers l'aval, entre la position de fermeture de la figure 2 et la position d'ouverture de la figure 3. Inversement, lorsque la tige d'actionnement 66 est entraînée en rotation dans le sens du dévissage, elle provoque le coulissement axial du coulisseau 42 de l'aval vers l'amont.

La plaque transversale 62 se prolonge ici par deux bras transversaux 68 qui forment un dispositif anti-rotation pour le coulisseau 42. Ces bras transversaux 68 sont reçus dans des glissières 70 complémentaires aménagées sur les parois du logement 14 ce qui permet de guider le coulisseau 42 dans la partie haute 72 du logement 14 lors de la rotation de la tige d'actionnement 66.

Bien entendu, d'autres solutions d'actionnement et une autre solution de dispositif anti rotation pourraient être prévus en remplacement de ceux décrits ici.

Avantageusement, le coulisseau 42 comporte au moins un évent 74, ici deux évents 74, qui font communiquer l'intérieur et l'extérieur du coulisseau 42 à l'extrémité aval de la vanne de détente 12. Les évents 74 sont constitués ici de perçages radiaux dans la paroi axiale 44, juste au-dessous de chaque bras transversal 68.

Avantageusement, le diamètre extérieur du coulisseau 42, au niveau de sa paroi axiale 44, est légèrement inférieur au diamètre intérieur correspondant du logement 14 de manière à permettre un passage de fluide depuis le conduit aval 20 jusqu'à la partie haute 72 du logement 14, et jusqu'à l'intérieur du coulisseau par les évents 74, quelle que soit la position du coulisseau 42. Ceci permet d'assurer un équilibre de pression de part et d'autre de la plaque transversale 62 de manière que l'actionneur 26 n'ait pas un effort important à fournir lors d'une phase d'ouverture ou de fermeture de la vanne de détente 12 dû au différentiel de pression entre le conduit amont 18 et le conduit aval 20.

On décrit maintenant le fonctionnement de l'ensemble de vanne 10 selon le premier mode de réalisation à partir de la position de fermeture qui est illustrée par la figure 2.

Dans l'exemple représenté, en position de fermeture, on considère que le conduit amont 18 est à une première pression P1 différente de la seconde pression P2 dans le conduit aval 20. L'ensemble de vanne 10 selon l'invention est capable de fonctionner avec un différentiel de pression très important entre le conduit amont 18 et le conduit aval 20, par exemple un différentiel de pression de 160 bars.

Dans la position de fermeture, le conduit amont 18, le canal principal 30, et l'évidement 48 sont tous à la même pression c'est-à-dire ici la première pression P1. Le contact étanche entre la paroi axiale 44 et la base du tronçon tronconique 50, et le contact étanche entre la bague de frottement 54 et l'alésage cylindrique 46 empêchent la circulation du fluide entre l'amont et l'aval.

Le conduit aval 20, l'espace radial 76 entre le coulisseau 42 et le logement 14, la partie haute 72 du logement 14, l'intérieur du coulisseau 42, sont tous à la même pression, c'est-à-dire ici la seconde pression P2.

Lorsque l'on commande l'ouverture progressive de la vanne de détente 12, l'actionneur 26 provoque le coulissement du coulisseau 42 vers l'aval, c'est-à-dire vers le haut en considérant les figures 2 et 3. En coulissant vers l'aval, le coulisseau 42 découvre progressivement l'évidement 48 ce qui permet une progressivité dans la détente du fluide qui commence à passer progressivement depuis le conduit amont 18 vers le conduit aval 20, ou l'inverse en fonction du différentiel de pression.

On note que la progressivité de la détente dépend de l'inclinaison de la paroi du tronçon tronconique 50 par rapport à l'alésage cylindrique 46. Plus cette inclinaison est faible, plus la détente sera progressive. En effet, la section de passage du fluide entre le tronçon tronconique 50 et l'alésage cylindrique 46 augmente progressivement lorsque le coulisseau 42 se déplace vers l'aval. Le coulisseau 42 poursuit sa course jusqu'à la position d'ouverture complète qui est représentée sur la figure 3. Avantageusement, dans la position d'ouverture complète, le coulisseau 42 est décalé axialement vers l'aval par rapport aux orifices aval 38 de manière à les découvrir complètement et ainsi maximiser la section de passage du fluide entre l'aval et l'amont.

Bien entendu, l'ensemble de vanne 10 fonctionne de manière similaire dans le sens inverse, lorsque le coulisseau 42 se déplace de la position d'ouverture vers la position de fermeture.

La vanne de détente 12 selon l'invention présente donc l'avantage de pouvoir être bidirectionnelle et permettre un contrôle de la détente du fluide que ce soit dans le sens amont vers l'aval que dans le sens aval vers l'amont. Dans un premier cas la première pression P1 est supérieure à la seconde pression P2, dans un second cas la première pression P1 est inférieure à la seconde pression P2.

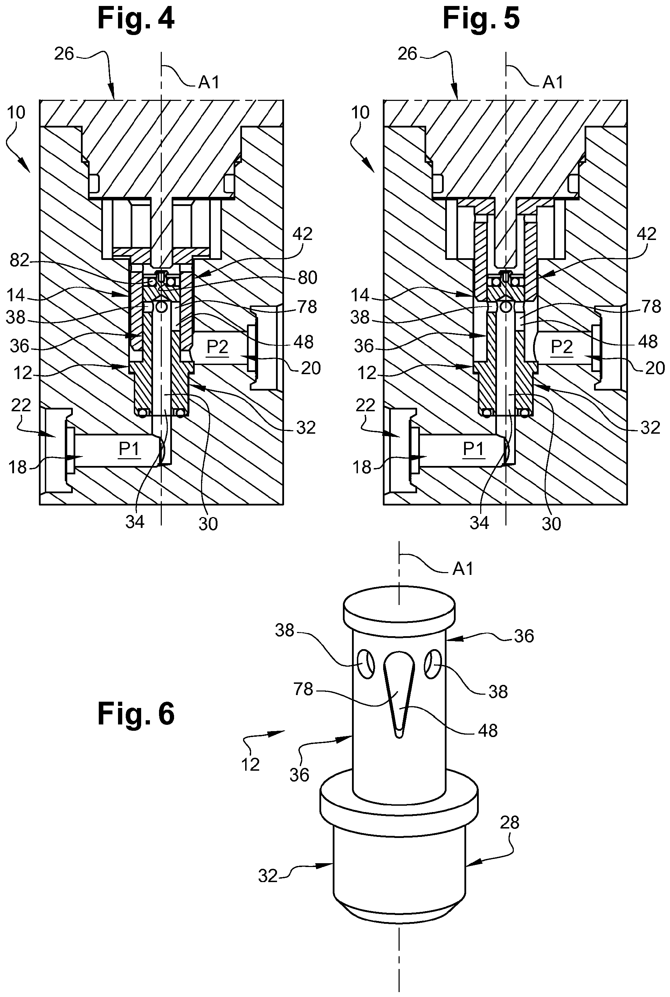

Sur les figures 4 à 6 on a représenté un deuxième mode de réalisation de l'ensemble de vanne 10 qui ne fait pas partie de l'invention. On décrira maintenant uniquement les éléments principaux qui différencient le deuxième mode de réalisation du premier.

Dans le deuxième mode de réalisation, le corps de vanne 28 a une forme cylindrique de section circulaire et non pas un tronçon tronconique, comme représenté sur la figure 6. La progressivité de la détente est obtenue en aménageant sur la paroi axiale extérieure du corps de vanne 28 un évidement 48 sous la forme d'une fente 78 qui s'élargit progressivement vers l'aval jusqu'à atteindre la hauteur des orifices aval 38. Ainsi, lors d'une phase d'ouverture, le coulisseau 42 commence d'abord par découvrir le bas de la fente 78, qui a une section de passage très faible, puis le haut de la fente 78 qui a une section de passage plus grande, jusqu'à découvrir tous les orifices aval 38, comme illustré par la figure 5.

Le deuxième mode de réalisation se distingue aussi par l'agencement de la bague de frottement 54 et sa retenue sur le corps de vanne 28. Ici la bague de frottement 54 comporte une gorge annulaire intérieure 80 dans laquelle une partie de l'élément élastique de rappel 56 vient se loger. L'extension axiale 60 du corps de vanne 28 comporte ici une gorge annulaire extérieure 82 dans laquelle une partie de l'élément élastique de rappel 56 vient se loger. L'élément de retenue 58 est ici constitué par un écrou qui vient se visser sur l'extension axiale 60, en remplacement de la rondelle sertie utilisée dans le premier mode de réalisation.

Dans ce deuxième mode de réalisation, le corps de vanne 28 peut comporter une surface formant siège sur laquelle le coulisseau 42 vient en appui axial étanche dans sa position de fermeture.

Le fonctionnement de l'ensemble de vanne 10 selon le deuxième mode de réalisation est identique à celui décrit pour le premier mode de réalisation.

### LEGENDE

- 10 :: ensemble de vanne
- 12 :: vanne de détente
- 14 :: logement
- 16 :: corps de montage
- 18 :: conduit amont
- 20 :: conduit aval
- 22 :: passage de fluide
- 24 :: face supérieure
- 26 :: actionneur
- 28 :: corps de vanne
- 30 :: canal principal
- 32 :: tronçon d'extrémité axiale amont
- 34 :: orifice amont
- 36 :: tronçon d'extrémité axiale aval
- 38 :: orifice aval
- 40 :: dispositif d'obturation
- 42 :: coulisseau
- 44 :: paroi axiale
- 46 :: alésage cylindrique
- 48 :: évidement
- 50 :: tronçon tronconique
- 52 :: élément d'étanchéité
- 54 :: bague de frottement
- 56 :: élément élastique de rappel
- 58 :: élément de retenue
- 60 :: extension axiale
- 62 :: plaque transversale
- 64 :: trou taraudé
- 66 :: tige d'actionnement
- 68 :: bras transversal
- 70 :: glissières
- 72 :: partie haute
- 74 :: évent
- 76 :: espace radial
- 78 :: fente
- 80 :: gorge annulaire intérieure
- 82 :: gorge annulaire extérieure
- A1 :: axe principal
- P1 :: première pression
- P2 :: seconde pression
- 76 :: espace radial
- 78 :: fente
- 80 :: gorge annulaire intérieure
- 82 :: gorge annulaire extérieure
- A1 :: axe principal
- P1 :: première pression
- P2 :: seconde pression

## Revendications

1. Vanne de détente (12) prévue pour être agencée dans un passage de fluide (22) entre un conduit amont (18) et un conduit aval (20), la vanne de détente (12) comprenant :
- un corps de vanne (28) tubulaire qui est pourvu, dans un tronçon d'extrémité axiale amont (32), d'au moins un orifice amont (34) prévu pour être en communication avec le conduit amont (18) et, dans un tronçon d'extrémité axiale aval (36), d'au moins un orifice aval (38) prévu pour être en communication avec le conduit aval (20), l'orifice aval (38) et l'orifice amont (34) étant reliés par un canal principal (30),
- un dispositif d'obturation (40) qui est mobile entre une position fermée et une position ouverte par rapport à l'orifice aval (20),
dans lequel le dispositif d'obturation (40) comporte un coulisseau (42) qui est monté coulissant axialement sur le tronçon d'extrémité axiale aval (36) du corps de vanne (28), entre la position fermée dans laquelle une paroi axiale (44) du coulisseau (42) obture l'orifice aval (38) et la position ouverte dans laquelle la paroi axiale (44) du coulisseau (42) libère le passage entre le conduit aval (20) et l'orifice aval (38),
dans lequel le tronçon d'extrémité axiale aval (36) du corps de vanne (28) comporte un tronçon tronconique (50) de diamètre extérieur décroissant de l'amont vers l'aval jusqu'à l'orifice aval (38),
**caractérisée en ce que** le tronçon d'extrémité axiale aval (36) du corps de vanne (28) comporte, au voisinage de l'orifice aval (38), un évidement (48) prévu pour provoquer une détente progressive et maitrisée lors de l'ouverture de la vanne de détente (12), l'orifice aval (38) s'étendant radialement entre le canal principal (30) et l'évidement (48),
et **en ce que** la paroi axiale (44) du coulisseau (42) délimite un alésage cylindrique (46) dont le diamètre est compris entre le plus grand diamètre et le plus petit diamètre du tronçon tronconique (50) de manière à assurer un contact étanche entre la paroi axiale (44) et le tronçon tronconique (50) dans la position fermée.

2. Vanne de détente (12) selon la revendication précédente, **caractérisée en ce que** l'extrémité axiale aval du corps de vanne (28) est pourvue d'un élément d'étanchéité (52) radiale qui coopère de manière étanche par glissement avec l'alésage cylindrique (46).

3. Vanne de détente (12) selon la revendication précédente, **caractérisée en ce que** l'élément d'étanchéité (52) comporte une bague de frottement (54), par exemple en polytétrafluoroéthylène, qui est plaquée contre l'alésage cylindrique (46) par un élément élastique de rappel (56).

4. Vanne de détente (12) selon la revendication 2 ou la revendication 3, **caractérisée en ce que** le tronçon d'extrémité axiale aval (36) du corps de vanne (28) comporte une extension axiale (60) et un élément de retenue (58) qui est fixé sur l'extension axiale (60) et qui retient axialement l'élément d'étanchéité (52) sur le corps de vanne (28).

5. Vanne de détente (12) selon l'une quelconque des revendications 2 à 4, **caractérisée en ce que** l'élément élastique de rappel (56) est constitué par un joint annulaire en matériau du type élastomère.

6. Vanne de détente (12) selon l'une quelconque des revendications précédentes, **caractérisée en ce que** le coulisseau (42) comporte au moins un évent (74) qui fait communiquer l'intérieur et l'extérieur du coulisseau (42) à l'extrémité aval de la vanne de détente (12).

7. Vanne de détente (12) selon la revendication précédente, **caractérisée en ce que** l'évent (74) s'étend radialement dans la paroi axiale (44) du coulisseau (42).

8. Vanne de détente (12) selon l'une quelconque des revendications précédentes, **caractérisée en ce que** le coulisseau (42) comporte un dispositif anti-rotation (68) prévu pour coopérer avec un élément fixe (70) lors du coulissement du coulisseau (42) entre sa position de fermeture et sa position d'ouverture de manière à empêcher la rotation du coulisseau (42) par rapport au corps de vanne (28).

9. Vanne de détente (12) selon l'une quelconque des revendications précédentes, **caractérisée en ce que** le corps de vanne (28) comporte plusieurs orifices aval (38) répartis circonférentiellement.

10. Vanne de détente (12) selon l'une quelconque des revendications précédentes, **caractérisée en ce qu'**elle est du type bidirectionnelle, la détente pouvant être réalisée depuis le conduit amont vers le conduit aval et depuis le conduit aval vers le conduit amont.

11. Ensemble de vanne (10) comportant :
- une vanne de détente (12),
- un actionneur (26) apte à commander la vanne de détente (12) en position ouverte ou fermée
- un corps de montage (16) comportant un conduit amont (18) et un conduit aval (20), et comportant un logement (14) apte à recevoir la vanne de détente (12),
**caractérisé en ce que** la vanne de détente (12) est réalisée selon l'une quelconque des revendications précédentes, l'actionneur (26) étant relié au coulisseau (42) pour en commander le coulissement entre sa position d'ouverture et sa position de fermeture.

12. Ensemble de vanne (10) selon la revendication précédente prise en combinaison avec la revendication 6, **caractérisé en ce que** le diamètre intérieur du logement (14) est légèrement supérieur au diamètre extérieur du coulisseau (42), de manière à former un passage pour le fluide depuis le conduit aval (20) jusqu'à l'intérieur du coulisseau (42) à travers les évents (74) assurant un équilibre de pression entre l'intérieur et l'extérieur du coulisseau (42).

## Patentansprüche

1. Entspannungsventil (12), das dazu vorgesehen ist, in einem Fluiddurchgang (22) zwischen einer stromaufwärtigen Leitung (18) und einer stromabwärtigen Leitung (20) angeordnet zu werden, wobei das Entspannungsventil (12) umfasst:
- einen rohrförmigen Ventilkörper (28), der in einem stromaufwärtigen axialen Endabschnitt (32) mit mindestens einer stromaufwärtigen Öffnung (34), die dazu vorgesehen ist, mit der stromaufwärtigen Leitung (18) in Verbindung zu stehen, und in einem stromabwärtigen axialen Endabschnitt (36) mit mindestens einer stromabwärtigen Öffnung (38), die dazu vorgesehen ist, mit der stromabwärtigen Leitung (20) in Verbindung zu stehen, versehen ist, wobei die stromabwärtige Öffnung (38) und die stromaufwärtige Öffnung (34) durch einen Hauptkanal (30) verbunden sind,
- eine Verschlusseinrichtung (40), die zwischen einer geschlossenen Stellung und einer offenen Stellung in Bezug auf die stromabwärtige Öffnung (20) beweglich ist, wobei die Verschlusseinrichtung (40) einen Schieber (42) umfasst, der axial verschiebbar auf dem stromabwärtigen axialen Endabschnitt (36) des Ventilkörpers (28) angebracht ist, zwischen der geschlossenen Stellung, in der eine axiale Wand (44) des Schiebers (42) die stromabwärtige Öffnung (38) verschließt, und der offenen Stellung, in der die axiale Wand (44) des Schiebers (42) den Durchgang zwischen der stromabwärtigen Leitung (20) und der stromabwärtigen Öffnung (38) freigibt,
wobei der stromabwärtige axiale Endabschnitt (36) des Ventilkörpers (28) einen kegelstumpfförmigen Abschnitt (50) mit einem Außendurchmesser umfasst, der von stromaufwärts nach stromabwärts bis zur stromabwärtigen Öffnung (38) abnimmt,
**dadurch gekennzeichnet, dass** der stromabwärtige axiale Endabschnitt (36) des Ventilkörpers (28) in der Nähe der stromabwärtigen Öffnung (38) eine Ausnehmung (48) umfasst, die dazu vorgesehen ist, beim Öffnen des Entspannungsventils (12) eine progressive und kontrollierte Entspannung zu bewirken, wobei sich die stromabwärtige Öffnung (38) radial zwischen dem Hauptkanal (30) und der Ausnehmung (48) erstreckt,
und dadurch, dass die axiale Wand (44) des Schiebers (42) eine zylindrische Bohrung (46) begrenzt, deren Durchmesser zwischen dem größten Durchmesser und dem kleinsten Durchmesser des kegelstumpfförmigen Abschnitts (50) liegt, um in der geschlossenen Stellung einen dichten Kontakt zwischen der axialen Wand (44) und dem kegelstumpfförmigen Abschnitt (50) zu gewährleisten.

2. Entspannungsventil (12) nach dem vorhergehenden Anspruch, **dadurch gekennzeichnet, dass** das stromabwärtige axiale Ende des Ventilkörpers (28) mit einem radialen Dichtungselement (52) versehen ist, das gleitend dichtend mit der zylindrischen Bohrung (46) zusammenwirkt.

3. Entspannungsventil (12) nach dem vorhergehenden Anspruch, **dadurch gekennzeichnet, dass** das Dichtungselement (52) einen Reibring (54), zum Beispiel aus Polytetrafluorethylen, umfasst, der durch ein elastisches Rückstellelement (56) gegen die zylindrische Bohrung (46) gedrückt wird.

4. Entspannungsventil (12) nach Anspruch 2 oder Anspruch 3, **dadurch gekennzeichnet, dass** der stromabwärtige axiale Endabschnitt (36) des Ventilkörpers (28) einen axialen Fortsatz (60) und ein Halteelement (58) umfasst, das auf dem axialen Fortsatz (60) befestigt ist und das das Dichtungselement (52) axial am Ventilkörper (28) hält.

5. Entspannungsventil (12) nach einem der Ansprüche 2 bis 4, **dadurch gekennzeichnet, dass** das elastische Rückstellelement (56) durch eine ringförmige Dichtung aus einem Material vom Elastomertyp gebildet ist.

6. Entspannungsventil (12) nach einem der vorhergehenden Ansprüche, **dadurch gekennzeichnet, dass** der Schieber (42) mindestens eine Entlüftungsöffnung (74) umfasst, die das Innere und das Äußere des Schiebers (42) am stromabwärtigen Ende des Entspannungsventils (12) in Verbindung setzt.

7. Entspannungsventil (12) nach dem vorhergehenden Anspruch, **dadurch gekennzeichnet, dass** sich die Entlüftungsöffnung (74) radial in der axialen Wand (44) des Schiebers (42) erstreckt.

8. Entspannungsventil (12) nach einem der vorhergehenden Ansprüche, **dadurch gekennzeichnet, dass** der Schieber (42) eine Verdrehsicherung (68) umfasst, die dazu vorgesehen ist, beim Verschieben des Schiebers (42) zwischen seiner Schließstellung und seiner Öffnungsstellung mit einem feststehenden Element (70) zusammenzuwirken, um die Drehung des Schiebers (42) in Bezug auf den Ventilkörper (28) zu verhindern.

9. Entspannungsventil (12) nach einem der vorhergehenden Ansprüche, **dadurch gekennzeichnet, dass** der Ventilkörper (28) mehrere stromabwärtige Öffnungen (38) umfasst, die umfänglich verteilt sind.

10. Entspannungsventil (12) nach einem der vorhergehenden Ansprüche, **dadurch gekennzeichnet, dass** es vom bidirektionalen Typ ist, wobei die Entspannung von der stromaufwärtigen Leitung zur stromabwärtigen Leitung und von der stromabwärtigen Leitung zur stromaufwärtigen Leitung durchgeführt werden kann.

11. Ventilanordnung (10), umfassend:
- ein Entspannungsventil (12),
- einen Stellantrieb (26), der geeignet ist, das Entspannungsventil (12) in der offenen oder geschlossenen Stellung zu steuern
- einen Montagekörper (16), der eine stromaufwärtige Leitung (18) und eine stromabwärtige Leitung (20) umfasst und der eine Aufnahme (14) umfasst, die geeignet ist, das Entspannungsventil (12) aufzunehmen,
**dadurch gekennzeichnet, dass** das Entspannungsventil (12) nach einem der vorhergehenden Ansprüche ausgeführt ist, wobei der Stellantrieb (26) mit dem Schieber (42) verbunden ist, um dessen Verschiebung zwischen seiner Öffnungsstellung und seiner Schließstellung zu steuern.

12. Ventilanordnung (10) nach dem vorhergehenden Anspruch in Kombination mit Anspruch 6, **dadurch gekennzeichnet, dass** der Innendurchmesser der Aufnahme (14) geringfügig größer ist als der Außendurchmesser des Schiebers (42), um einen Durchgang für das Fluid von der stromabwärtigen Leitung (20) bis zum Inneren des Schiebers (42) durch die Entlüftungsöffnungen (74) zu bilden, der einen Druckausgleich zwischen dem Inneren und dem Äußeren des Schiebers (42) gewährleistet.

## Claims

1. Expansion valve (12) intended to be arranged in a fluid passage (22) between an upstream conduit (18) and a downstream conduit (20), the expansion valve (12) comprising:
- a tubular valve body (28) which is provided, in an upstream axial end section (32), with at least one upstream orifice (34) intended to be in communication with the upstream conduit (18) and, in a downstream axial end section (36), with at least one downstream orifice (38) intended to be in communication with the downstream conduit (20), the downstream orifice (38) and the upstream orifice (34) being connected by a main channel (30),
- a closure device (40) which is movable between a closed position and an open position relative to the downstream orifice (20),
in which the closure device (40) comprises a slide (42) which is mounted to slide axially on the downstream axial end section (36) of the valve body (28), between the closed position in which an axial wall (44) of the slide (42) closes off the downstream orifice (38) and the open position in which the axial wall (44) of the slide (42) frees the passage between the downstream conduit (20) and the downstream orifice (38),
in which the downstream axial end section (36) of the valve body (28) comprises a frustoconical section (50) of outer diameter decreasing from upstream to downstream as far as the downstream orifice (38),
**characterized in that** the downstream axial end section (36) of the valve body (28) comprises, in the vicinity of the downstream orifice (38), a recess (48) designed to cause a progressive and controlled expansion during the opening of the expansion valve (12), the downstream orifice (38) extending radially between the main channel (30) and the recess (48),
and **in that** the axial wall (44) of the slide (42) delimits a cylindrical bore (46) whose diameter is comprised between the largest diameter and the smallest diameter of the frustoconical section (50) so as to ensure a sealed contact between the axial wall (44) and the frustoconical section (50) in the closed position.

2. Expansion valve (12) according to the preceding claim, **characterized in that** the downstream axial end of the valve body (28) is provided with a radial sealing element (52) which cooperates in a sealing manner by sliding with the cylindrical bore (46).

3. Expansion valve (12) according to the preceding claim, **characterized in that** the sealing element (52) comprises a friction ring (54), for example of polytetrafluoroethylene, which is pressed against the cylindrical bore (46) by an elastic return element (56).

4. Expansion valve (12) according to claim 2 or claim 3, **characterized in that** the downstream axial end section (36) of the valve body (28) comprises an axial extension (60) and a retaining element (58) which is fixed on the axial extension (60) and which axially retains the sealing element (52) on the valve body (28).

5. Expansion valve (12) according to any one of claims 2 to 4, **characterized in that** the elastic return element (56) is constituted by an annular seal of an elastomer-type material.

6. Expansion valve (12) according to any one of the preceding claims, **characterized in that** the slide (42) comprises at least one vent (74) which puts the interior and the exterior of the slide (42) in communication at the downstream end of the expansion valve (12).

7. Expansion valve (12) according to the preceding claim, **characterized in that** the vent (74) extends radially in the axial wall (44) of the slide (42).

8. Expansion valve (12) according to any one of the preceding claims, **characterized in that** the slide (42) comprises an anti-rotation device (68) intended to cooperate with a fixed element (70) during the sliding of the slide (42) between its closing position and its opening position so as to prevent the rotation of the slide (42) relative to the valve body (28).

9. Expansion valve (12) according to any one of the preceding claims, **characterized in that** the valve body (28) comprises several downstream orifices (38) distributed circumferentially.

10. Expansion valve (12) according to any one of the preceding claims, **characterized in that** it is of the bidirectional type, the expansion being able to be carried out from the upstream conduit to the downstream conduit and from the downstream conduit to the upstream conduit.

11. Valve assembly (10) comprising:
- an expansion valve (12),
- an actuator (26) capable of controlling the expansion valve (12) in the open or closed position
- a mounting body (16) comprising an upstream conduit (18) and a downstream conduit (20), and comprising a housing (14) capable of receiving the expansion valve (12),
**characterized in that** the expansion valve (12) is realized according to any one of the preceding claims, the actuator (26) being connected to the slide (42) in order to control the sliding thereof between its opening position and its closing position.

12. Valve assembly (10) according to the preceding claim taken in combination with claim 6, **characterized in that** the inner diameter of the housing (14) is slightly greater than the outer diameter of the slide (42), so as to form a passage for the fluid from the downstream conduit (20) to the interior of the slide (42) through the vents (74) ensuring a pressure balance between the interior and the exterior of the slide (42).
